# EUROPEAN PATENT APPLICATION

(11) **EP 4 491 551 A1**
(43) Date of publication of application: **15.01.2025**
(21) Application number: 24185647.5
(22) Date of filing: 01.07.2024
(51) Int. Cl.: B65H 1/04, B65H 31/20

(54) **A MAGAZINE FOR AT LEAST ONE BUNDLE OF BLANKS**

(30) Priority: 12.07.2023 IT 202300014589
(71) Applicant: G.D S.p.A., 40133 Bologna (IT)
(72) Inventor: CARBONI, Salvatore, Bologna (IT); BIONDI, Andrea, Bologna (IT); VITALI, Antonio, Bologna (IT)
(74) Representative: Puggioli, Tommaso

(57) **Abstract**

Magazine for at least one bundle of blanks (M) which comprises a plurality of vertical supports (2), each comprising a succession of supporting members (3) arranged along a height of the vertical support (2) at predetermined distances from each other to support said bundle of blanks (M) from below; a base structure (4) having a plurality of seats (5), each being configured to receive at least one end portion (21) of a vertical support (2) of said plurality of vertical supports (2), said end portion (21) of the vertical support (2) and the base structure (4) being configured to be removably coupled to each other at said seats (5), a coupling between the vertical supports (2) and the base structure (4) defining at least one vertically-extended channel (6) having an upper opening (61) for inserting and extracting said bundle of blanks (M), said seats (5) being arranged in the base structure (4) at predetermined distances from each other in such a way as to allow at least a first positioning (P1) of said vertical supports (2), defining a first configuration (C1) of said channel (6), and a second positioning (P2) of said vertical supports (2), defining a second configuration (C2) of said channel (6) different from the first configuration (C1); a releasable fastening system (7) for fastening the vertical supports (2) to the base structure (4).

## Description

The present invention relates to a magazine for bundles of blanks. "Bundle of blanks" means a group of blanks superimposed on each other to form a single unit from which each blank can be collected at a pick-up station.

These blanks can be made, for example, of cardboard but other materials can be used depending on the final use of the blank itself.

Magazines are known for containing bundles of blanks in which the blanks are arranged in vertical stacks to facilitate their collection and reduce the overall dimensions of the magazine itself.

These vertically-extended magazines generally have vertical supports to support the bundles of blanks and each magazine is prepared to receive a specific format of blank.

Disadvantageously, this solution therefore requires preparing different magazines as a function of the format of the blank.

In this context, the need is therefore felt to realize a magazine that allows the aforementioned drawbacks to be overcome.

Aim of the present invention is to satisfy the aforementioned need by realizing a practical and versatile magazine for bundles of blanks that is able to contain different formats of blanks and, in particular, bundles of blanks.

In particular, according to the present invention, a magazine for at least one bundle of blanks as defined in claim 1 is realized.

The disclosure relates to a magazine for at least one bundle of blanks comprising a plurality of vertical supports.

Each of the vertical supports comprises a succession of supporting members, arranged along a height of the vertical support, at predetermined distances from each other to support the bundle of blanks from below.

The magazine comprises a base structure having a plurality of seats.

Preferably, the base structure is a plate.

Each seat is configured to receive at least one end portion of a vertical support.

The vertical support, in particular the end portion of the vertical support, and the base structure are configured to be removably coupled to each other at such seats.

In other words, the end portion of each of the vertical supports may be fitted into any of the seats of the base structure.

During use, it is possible to couple the vertical supports to the base structure and to decouple them therefrom as needed.

Preferably, the vertical supports are all the same one another.

A coupling between the vertical supports and the base structure defines at least one vertically-extended channel having an upper opening for inserting and extracting the bundle of blanks.

The seats are arranged in the base structure at predetermined distances from each other in such a way as to allow at least a first positioning of the vertical supports which defines a first configuration of the channel, and a second positioning of the vertical supports, which defines a second configuration of the channel.

The second configuration is different from the first configuration.

To better clarify, coupling the vertical supports to the base structure allows to define channels in which to insert the bundles of blanks. These bundles of blanks are supported from below by the supporting members distributed on each vertical support.

Advantageously, the removable coupling between the end portion of the vertical support and the base structure at these seats allows the magazine to be versatile. In fact, it is possible to couple the vertical supports to the base structure and to decouple them therefrom as needed. Advantageously, the arrangement of the seats allows the vertical supports to be coupled to the base structure according to different configurations as needed, in particular as a function of the format of the blanks of the bundles of blanks to be inserted into the channels.

In other words, the arrangement of the seats makes it possible to define different channel configurations depending on the format of the bundle of blanks to be inserted therein, thus making the magazine described in this invention particularly versatile and practical.

It should be observed that, as described, the present solution allows to provide a single magazine for bundles of blanks that is adaptable to multiple different formats of blanks.

In fact, the arrangement of the seats in the base structure can allow a plurality of positionings of the vertical supports and, consequently, a plurality of configurations of the channels for inserting bundles of blanks of different formats.

For example, a first positioning of the vertical supports corresponds to a first format of blanks, a second positioning corresponds to a second format of blanks, a third positioning corresponds to a third format of blanks, and so on.

It should be borne in mind that it is therefore possible to refer to the formats of blanks, by referring to a respective positioning of the vertical supports.

Note that the positioning of the vertical supports may define a two- or more channel configuration. In particular, such a two- or more channel configuration is used for blanks with small-sized formats.

The magazine comprises a releasable fastening system for fastening the vertical supports to the base structure.

Advantageously, a releasable fastening system allows the vertical supports and the base structure to be mutually fastened while maintaining the possibility of decoupling from each other, thus giving further practicality and versatility to the magazine subject-matter of this solution.

According to one aspect, the seats may be arranged in the base structure in such a way that at least one seat receives the end portion of one of the vertical supports both in the first positioning, defining the first channel configuration, and in the second positioning, defining the second channel configuration.

To better clarify, considering the positioning of the vertical supports defining the first configuration of the channel, the end portion of one of these vertical supports is received by a respective seat of the base structure; the same seat can receive the end portion of a vertical support also in the positioning of the vertical supports defining the second configuration of the channel.

Advantageously, having at least one seat that can be used for different channel configurations makes the magazine easily adaptable to different formats of bundles of blanks.

The base structure has, in proximity to each seat, at least one identification element configured to indicate a respective positioning of the vertical supports.

In other words, the base structure has, in proximity to each seat, one or more identification elements, each corresponding to a respective positioning of the vertical supports.

The base structure has, in proximity to each seat, one or more identification elements, schematically corresponding to the formats of the blanks that can be stacked in the magazine.

These identification elements are configured to indicate to which format(s) a positioning of the vertical supports in the respective seat intended to receive the end portion of the vertical support corresponds.

As mentioned, a positioning of the vertical supports corresponds to a format of blanks to be stored.

To better clarify, for example, the base structure has, in proximity to all the seats relatively positioned to receive a vertical support in the first positioning of the vertical supports, a first identification element that is the same for all said seats. The base structure, on the other hand, has in proximity to all the seats relatively positioned to receive a vertical support in the second positioning of the vertical supports a second identification element that is the same for all said seats.

The identification elements may be, for example, numbers and/or letters.

It should be observed that if a seat is positioned, in the base structure, to receive the end portion of a vertical support in more than one positioning of the vertical supports (i.e. for more than one format of the blank), it is possible that in proximity to this seat there are several different identification elements, in particular a different identification element for each of these respective positionings of the vertical supports. Advantageously, such identification elements allow an operator to quickly position the vertical supports as a function of the format of the blanks of the bundles to be positioned in the magazine.

According to one aspect, each vertical support comprises a flange arranged in proximity to the end portion.

The flange is configured, in a coupling condition between the vertical support and the base structure, to abut the base structure.

In other words, the coupling between the end portion of the vertical support and the base structure results, for example, in the positioning of the flange in contact with an upper surface of the base structure.

Inserting the end portion of the vertical support into a seat of the base structure brings the flange into abutment against the surface of the base structure.

According to one aspect, the base structure has at least one opening arranged in proximity to the respective seat.

According to one aspect, each flange has at least one respective through hole.

Preferably, during use, when the flange abuts the base structure, i.e. in a coupling condition between the vertical support and the base structure, the opening in the base structure and the through hole in the flange face each other so as to create a single continuous slot.

According to one aspect, the releasable fastening system comprises a fastening element.

The fastening element is configured to be removably coupled with the through hole of the flange and with the opening of the base structure to fasten the flange of the vertical support to the base structure. Advantageously, the fastening element gives greater stability to the vertical supports being coupled with the base structure.

In particular, the fastening element allows the supports to remain stable and to avoid any oscillations relative to the base structure when they support the bundles of blanks and/or when the magazine is moved.

For example, the fastening element may be a pin or a screw.

According to one aspect, the end portion of the vertical support comprises a hooking element.

The hooking element is configured to engage by coupling with the base structure at said seats.

Preferably, the seat is a through opening in the base structure and the hooking element can be, for example, a tooth configured to be inserted through the seat and abut the base structure from below.

According to one aspect, each vertical support has at least one mark associated with each supporting member.

Each mark is arranged along a height of the vertical support above the respective supporting member to indicate a predefined height of the bundle of blanks supported by said supporting member.

Preferably, each mark has an upper line and a lower line: these lines indicate a preferred height range of the bundle of blanks supported by said supporting member.

Advantageously, the mark facilitates the operation of loading the bundles of the blanks into the magazine, in particular when carried out manually.

In particular, the presence of the mark allows to stack in the magazine bundles of a predefined height (or with a height comprised between a maximum value and a minimum value) and, therefore, consisting of a predefined constant number of blanks, or of a number of blanks within a predefined range.

Storing bundles consisting of a predefined number of blanks allows facilitating the collection operations at a pick-up station and, in general, operations in the production step.

According to one aspect, each vertical support is fastenable to the base structure at said seats via the releasable fastening system in such a way as to allow at least two different arrangements of the supporting members relative to the base structure.

In other words, the releasable fastening system allows to fasten each vertical support to the base structure in such a way as to arrange the respective supporting members according to at least two different orientations of the supporting members themselves relative to the base structure.

The releasable fastening system allows each vertical support to be fastened to the base structure rotated, relative to its main extent axis, by different angles.

Advantageously, this feature allows the magazine to be more versatile to receive different formats of blanks stored according to different arrangements and geometries.

According to one aspect, the vertical supports are arranged along a perimeter of the channel.

Each vertical support has an internal vertical portion that delimits part of the channel.

Preferably, the supporting members are arranged along the internal vertical portion.

According to one aspect, each supporting member is movable between an extracted position and a retracted position.

In particular, in the extracted position the supporting member juts out from the internal vertical portion of the vertical support towards the inside of the channel to intercept a bundle of blanks moving down along the channel.

In the extracted position, the supporting members create different levels where the bundles of blanks are stored in a stacked position, preferably at mutual distances such as to create a predetermined space between two adjacent bundles.

In the retracted position, on the other hand, the supporting member is aligned or recessed relative to the internal vertical portion of the vertical support to allow the bundle of blanks to pass along the channel. According to one aspect, the magazine comprises an actuating device for each supporting member configured to move the respective supporting member from the retracted position to the extracted position.

The actuating device can be preferably commanded by an operator, preferably manually.

Preferably, each supporting member is movable between the extracted and retracted positions by rotation about a respective axis of horizontal rotation eccentric relative to the centre of gravity of the supporting member itself. In particular, the axis of rotation is arranged in such a position that the supporting member tends to remain in the extracted position under the action of the force of gravity and, preferably, also in the retracted position under the action of the force of gravity.

The actuating device can be like a push-button and have a pusher member that, pressed by an operator, pushes the supporting member away from the retracted position for a predetermined stroke as far as a position (intermediate relative to the extracted and retracted positions) in which the supporting member can spontaneously continue its rotation towards the extracted position thanks to the action of the force of gravity. Preferably, the supporting member is subject to the action of a retaining device configured to retain the supporting member in the retracted position.

For example, the retaining device can be of the magnetic type and configured to exert a magnetic attraction on the supporting member; this magnetic attraction is lower than the pushing action of the actuating device which, when activated, overcomes the action of the retaining device.

According to one aspect, each supporting member is configured to pass from the extracted position to the retracted position following an upward movement along the channel of a bundle of blanks arranged below the supporting member.

In other words, each supporting member is automatically movable from the extracted position to the retracted position following the thrust exerted upwards by a bundle of blanks below, moved upwards during a step of extracting the bundle itself from the magazine.

According to one aspect, the base structure of the magazine is equipped with wheels to allow a movement of the magazine itself.

The technical characteristics of the invention can be clearly seen from the contents of the claims set forth below, and the advantages thereof will more fully emerge from the detailed description which follows, made with reference to the accompanying drawings, which represent a purely exemplary and non-limiting embodiment thereof, wherein:
- figures 1, 2 and 3 illustrate, in a schematic representation in perspective view, three embodiments of the magazine for at least one bundle of blanks subject-matter of the present description;
- figure 4 illustrates a schematic representation in a perspective view of an embodiment of a detail of the magazine illustrated in figures 1, 2 and 3;

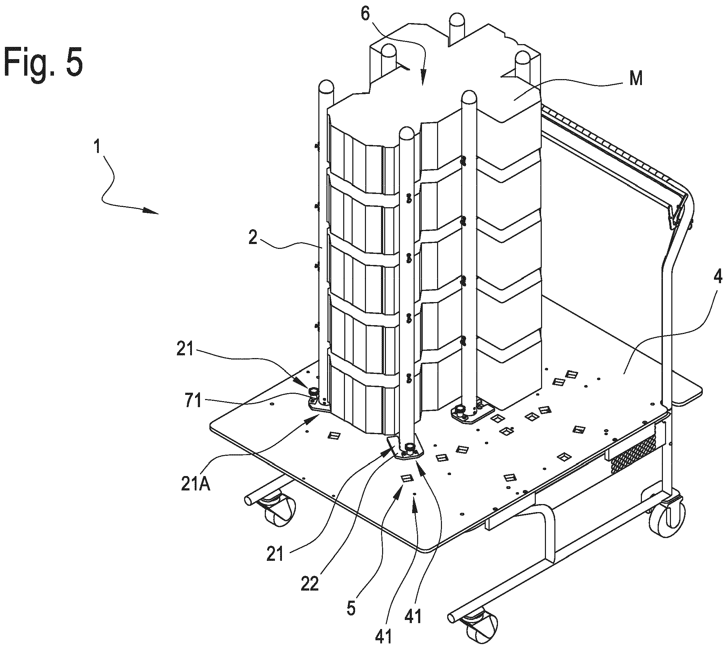

- figure 5 illustrates a schematic representation in perspective view of an embodiment of the magazine subject-matter of the present description;

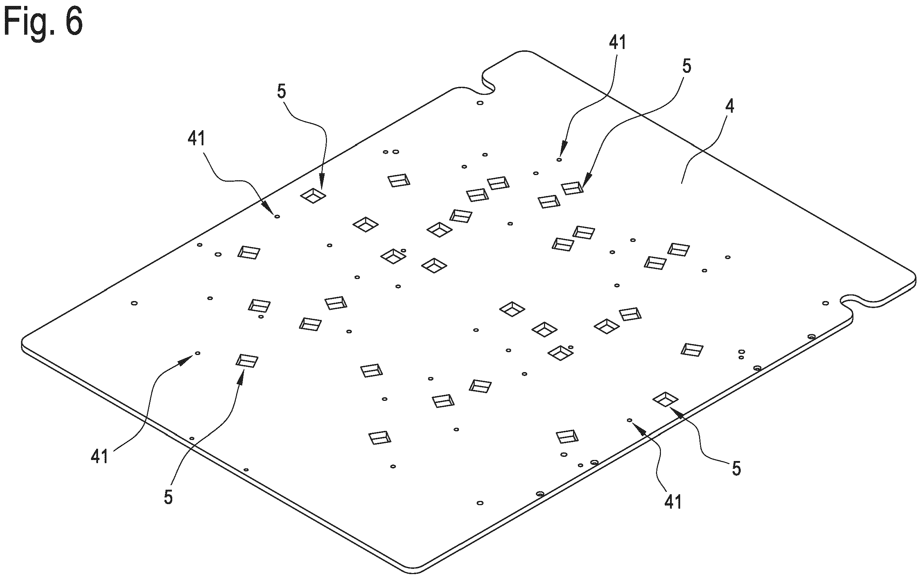

- figure 6 illustrates a schematic representation in a perspective view of an embodiment of a detail of the magazine illustrated in figure 5.

With reference to the attached figures, number 1 indicates a magazine for at least one bundle of blanks M.

The magazine 1 comprises a plurality of vertical supports 2.

Each of the vertical supports 2 comprises a succession of supporting members 3 arranged along a height of the vertical support 2 at predetermined distances from each other to support the bundle of blanks M from below.

Preferably, the vertical supports 2 are all the same one another.

The vertical supports 2 are, for example, tubular elements.

The magazine 1 comprises a base structure 4 having a plurality of seats 5. Each of the seats 5 is configured to receive at least one end portion 21 of a vertical support 2 of said plurality of vertical supports 2.

The end portion 21 of the vertical support 2 and the base structure 4 are configured to be removably coupled to each other at the seats 5. Preferably, the seats 5 are all the same one another.

The seats 5 can be, for example, holes in the base structure 4 with a round or polygonal shaped section.

A coupling between the vertical supports 2 and the base structure 4 defines at least one vertically-extended channel 6.

The channel 6 has an upper opening 61 for inserting and extracting the bundle of blanks M.

The seats 5 are arranged in the base structure 4 at predetermined distances from each other in such a way as to allow at least one positioning P1 of said vertical supports 2, defining a configuration C1 of said channel 6, and a positioning P2 of said vertical supports 2, defining a configuration C2 of said channel 6 different from the configuration C1.

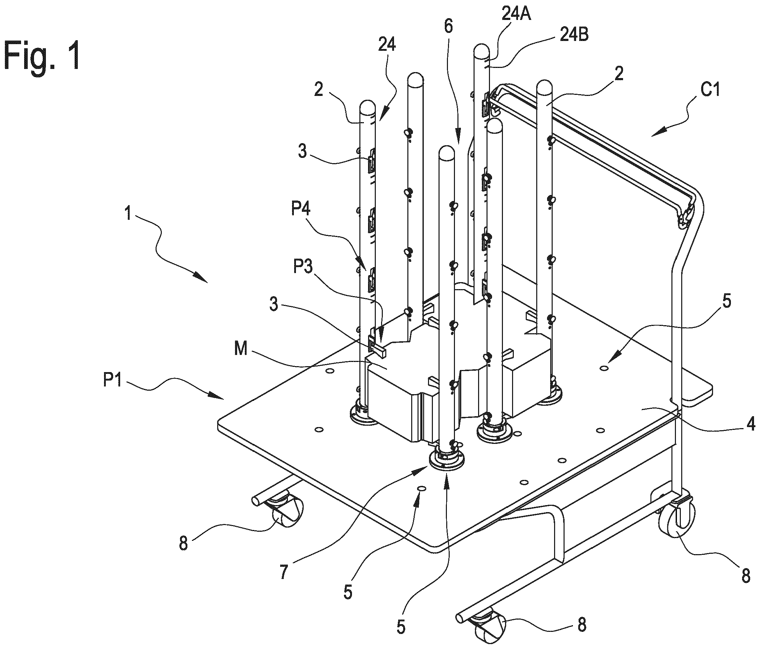

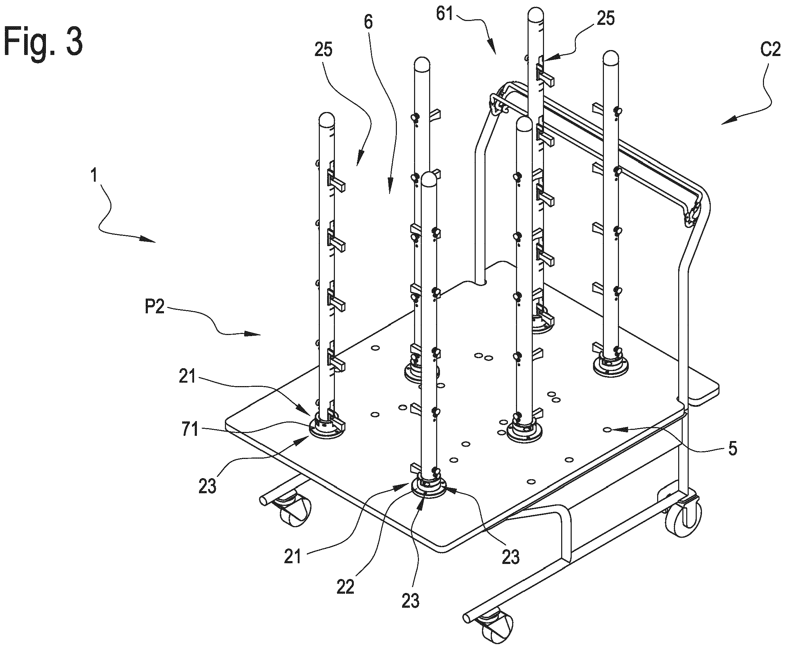

For example, figures 1, 2 and 3 depict three different positionings of the vertical supports defining three distinct configurations of the channel 6.

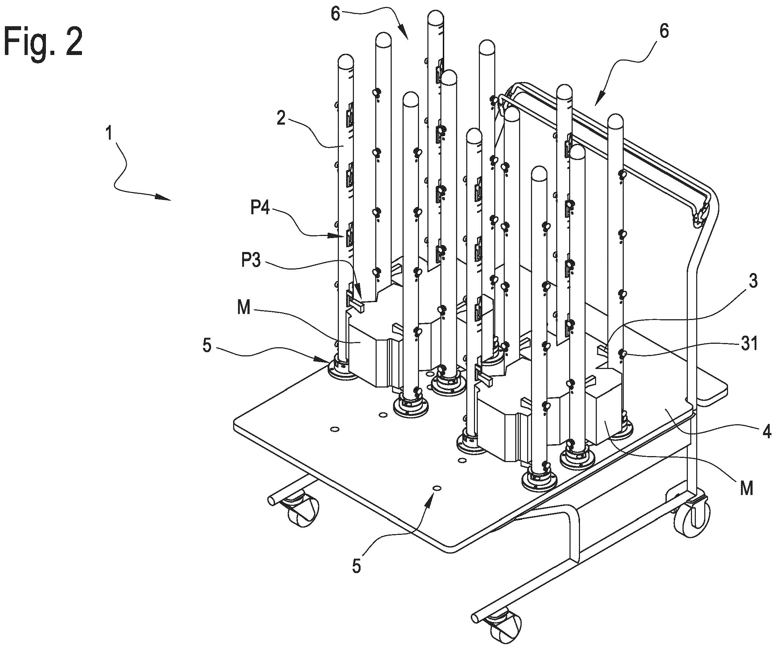

In particular, figure 2 illustrates a positioning of the vertical supports 2 defining two distinct channels 6.

In a preferred embodiment, the base structure 4 has, in proximity to each seat 5, at least one identification element 42 configured to indicate a respective positioning of the vertical supports 2.

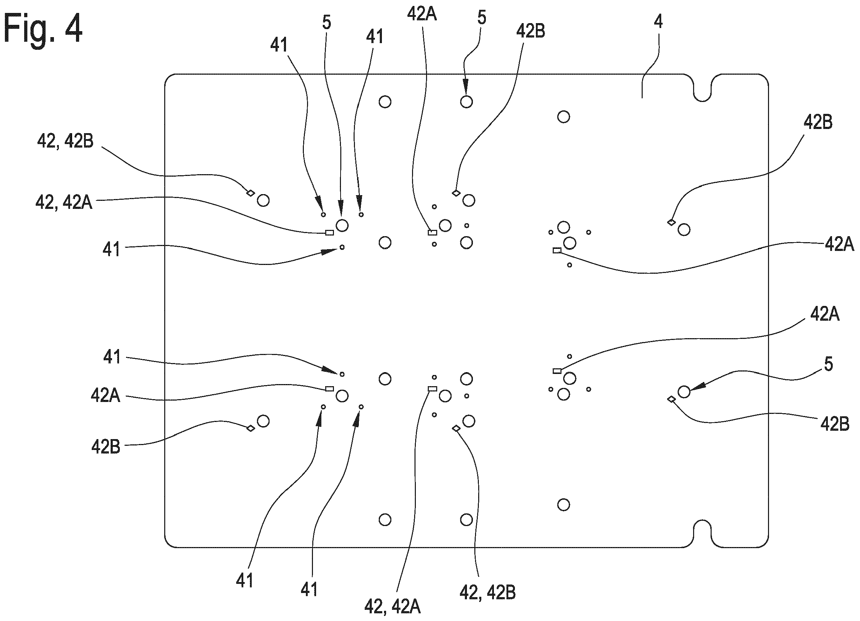

These identification elements 42 are illustrated only in figure 4 for the sake of simplicity of exposition.

To better clarify, for example, in figure 4 the base structure 4 has, in proximity to all the seats 5 configured to receive a vertical support 2 in the positioning P1 of the vertical supports 2, an identification element 42A that is the same for all said seats 5. The base structure 4 instead has in proximity to all the seats 5 configured to receive a vertical support 2 in the positioning P2 of the vertical supports 2 an identification element 42B that is the same for all said seats 5.

The identification elements are, for example, numbers and/or letters.

In a preferred embodiment of the magazine 1, the seats 5 are arranged in the base structure 4 in such a way that at least one seat 5 receives the end portion 21 of one of the vertical supports 2 both in the positioning P1 defining the configuration C1 of the channel 6 and in the positioning P2 defining the configuration C2 of the channel 6.

According to one embodiment, each vertical support 2 comprises a flange 22 arranged in proximity to the end portion 21.

The flange 22 is configured, in a coupling condition between the vertical support 2 and the base structure 4, to abut the base structure 4.

The flange 22 is, for example, in particular in the tubular embodiment of the vertical support 2, a circular crown.

Preferably, the base structure 4 consists of a plate.

The flange 22 preferably comprises a flat lower surface configured to abut the plate that constitutes the base structure 4 in the portion surrounding the seat at which the vertical support is coupled to the base structure 4 itself.

According to the present invention, the magazine 1 comprises a releasable fastening system 7 for fastening the vertical supports 2 to the base structure 4.

In one embodiment, for each seat 5, the base structure 4 has at least one opening 41 arranged in proximity to the respective seat 5 itself and each flange 22 has at least one respective through hole 23.

With the flange 22 abutting the base structure 4, each through hole 23 of the flange 22 is arranged at a respective opening 41 of the base structure 4.

These openings 41 are illustrated only in figure 4 for the sake of simplicity of exposition.

The releasable fastening system 7 comprises at least one fastening element 71 configured to be removably coupled with the through hole 23 of the flange 22 and with the opening 41 of the base structure 4 to fasten the flange 22 of the vertical support 2 to the base structure 4.

Preferably, the base structure 4 has three openings 41 arranged in proximity to each seat 5 and each flange 22 has three respective through holes 23. In this embodiment, the releasable fastening system 7 comprises three fastening elements 71: a fastening element 71 for each pair consisting of an opening 41 and a through hole 23.

The fastening element 71 is a pin or a threaded screw.

The openings 41 and the through holes 23 may have a threading to favour the coupling with the fastening element 71.

In one embodiment, the end portion 21 of the vertical support 2 comprises a hooking element 21A.

The hooking element 21A is configured to engage by coupling with the base structure 4 at said seats 5.

In particular, the hooking element 21A is configured to be inserted into the seat 5 and abut a lower surface of the base structure 4.

Preferably, the hooking element 21A is a tooth.

In a preferred embodiment of the magazine 1, as illustrated, for example, in figures 1, 2 and 3, each vertical support 2 has at least one mark 24 associated with each supporting member 3.

The mark 24 is arranged, along a height of the vertical support 2, above the respective supporting member 3 to indicate a predefined height of the bundle of blanks M supported by said supporting member 3.

Preferably, each mark 24 has an upper line 24A and a lower line 24B. The upper line 24A and the lower line 24B respectively indicate an upper and lower limit of a preferred height range of the bundle of blanks M supported by the respective supporting member 3 thereunder.

Preferably, each vertical support 2 is fastenable to the base structure 4 at said seats 5 via the releasable fastening system 7 in such a way as to allow at least two different arrangements of the supporting members 3 relative to the base structure 4.

Each vertical support 2 is therefore fastenable to the base structure 4 rotated, relative to its own main extent axis, by different angles, via the releasable fastening system 7.

Preferably, the vertical supports 2 are arranged along a perimeter of the channel 6.

Each vertical support 2 has an internal vertical portion 25, delimiting part of said channel 6.

The supporting members 3 are arranged along the internal vertical portion 25.

Preferably, each supporting member 3 is movable between an extracted position P3 and a retracted position P4.

In the extracted position P3, the supporting member 3 juts out from the internal vertical portion 25 of the vertical support 2 towards the inside of the channel 6 to intercept a bundle of blanks M moving down along the channel 6.

In the retracted position P4, the supporting member 3 is aligned or recessed relative to the internal vertical portion 25 of the vertical support 2 to allow the bundle of blanks M to pass along the channel 6.

In a preferred embodiment, the magazine 1 comprises an actuating device 31 for each supporting member 3 configured to move the respective supporting member 3 from the retracted position P4 to the extracted position P3.

For example, as illustrated in the accompanying figures, the actuating device 31 is a push-button that can be manually operated by an operator.

In one embodiment, each supporting member 3 is configured to pass from the extracted position P3 to the retracted position P4 following an upward movement along the channel 6 of a bundle of blanks M arranged below the supporting member 3.

To better clarify, during use, when a bundle of blanks M is collected from the magazine 1, moving the bundle M itself upwards results in an impact with the supporting members 3 above: this impact passively moves these supporting members 3 from the extracted position P3 to the retracted position P4.

In a preferred embodiment, the base structure 4 is equipped with wheels 8 to allow a movement of said magazine 1.

## Claims

1. A magazine for at least one bundle of blanks (M) comprising:
- a plurality of vertical supports (2), each comprising a succession of supporting members (3) arranged along a height of the vertical support (2) at predetermined distances from each other to support said bundle of blanks (M) from below;
- a base structure (4) having a plurality of seats (5), each being configured to receive at least one end portion (21) of a vertical support (2) of said plurality of vertical supports (2),
said end portion (21) of the vertical support (2) and the base structure (4) being configured to be removably coupled to each other at said seats (5), a coupling between the vertical supports (2) and the base structure (4) defining at least one vertically-extended channel (6) having an upper opening (61) for inserting and extracting said bundle of blanks (M),
said seats (5) being arranged in the base structure (4) at predetermined distances from each other in such a way as to allow at least a first positioning (P1) of said vertical supports (2), defining a first configuration (C1) of said channel (6), and a second positioning (P2) of said vertical supports (2), defining a second configuration (C2) of said channel (6) different from the first configuration (C1),
said magazine (1) comprising a releasable fastening system (7) for fastening the vertical supports (2) to the base structure (4),
the magazine being **characterized in that** the base structure (4) has, in proximity to each seat (5), at least one identification element (42) to indicate a respective positioning of the vertical supports (2).

2. The magazine according to any one of the preceding claims, wherein the seats (5) are arranged in the base structure (4) in such a way that at least one seat (5) receives the end portion (21) of one of the vertical supports (2) both in the first positioning (P1) defining the first configuration (C1) of the channel (6) and in the second positioning (P2) defining the second configuration (C2) of the channel (6).

3. The magazine according to any one of the preceding claims, wherein each vertical support (2) comprises a flange (22) arranged in proximity to the end portion (21), the flange (22) and/or the base structure being configured, in coupling condition between the vertical support (2) and the base structure (4), in such a way that the flange abuts the base structure (4).

4. The magazine according to the preceding claim, wherein, for each seat (5), the base structure (4) has at least one opening (41) arranged in proximity to the respective seat (5) and wherein each flange (22) has at least one respective through hole (23), the releasable fastening system (7) comprising a fastening element (71) configured to be removably coupled with the through hole (23) of the flange (22) and with the opening (41) of the base structure (4) to fasten the flange (22) of the vertical support (2) to the base structure (4).

5. The magazine according to any one of the preceding claims, wherein the end portion (21) of the vertical support (2) comprises a hooking element (21A) configured to engage by coupling with the base structure (4) at said seats (5).

6. The magazine according to any one of the preceding claims, wherein each vertical support (2) has at least one mark (24) associated with each supporting member (3), each mark (24) being arranged along a height of the vertical support (2) above the respective supporting member (3) to indicate a predefined height of the bundle of blanks (M) supported by said supporting member (3).

7. The magazine according to any one of the preceding claims, wherein each vertical support (2) is fastenable to the base structure (4) at said seats (5) via the releasable fastening system (7) in such a way as to allow at least two different arrangements of the supporting members (3) relative to the base structure (4).

8. The magazine according to any one of the preceding claims, wherein the vertical supports (2) are arranged along a perimeter of the channel (6), each vertical support (2) having an internal vertical portion (25), delimiting part of said channel (6), the supporting members (3) being arranged along the internal vertical portion (25).

9. The magazine according to the preceding claim, wherein each supporting member (3) is movable between an extracted position (P3), in which it juts out from the internal vertical portion (25) of the vertical support (2) towards the inside of the channel (6) to intercept a bundle of blanks (M) moving down along the channel (6), and a retracted position (P4), in which it is aligned or recessed relative to the internal vertical portion (25) of the vertical support (2) to allow the bundle of blanks (M) to pass along the channel (6).

10. The magazine according to the preceding claim, comprising an actuating device (31) for each supporting member (3) configured to move the respective supporting member (3) from the retracted position (P4) to the extracted position (P3).

11. The magazine according to any one of claims 9 to 10, wherein each supporting member (3) is configured to pass from the extracted position (P3) to the retracted position (P4) following an upward movement along the channel (6) of a bundle of blanks (M) arranged below the supporting member (3).

12. The magazine according to any one of the preceding claims, wherein the base structure (4) is equipped with wheels (8) to allow a movement of said magazine (1).
